# EUROPÄISCHE PATENTANMELDUNG

(11) **EP 0 871 276 A2**
(43) Veröffentlichungstag der Anmeldung: **14.10.1998**
(21) Anmeldenummer: 98105700.3
(22) Anmeldetag: 28.03.1998
(51) Int. Cl.: H02J 13/00

(54) **Versorgungsnetz mit Verwaltungseinrichtung**

(30) Priorität: 07.04.1997 DE 19714241; 10.03.1998 DE 19810229
(71) Anmelder: Franken Plastik GmbH, D-90763 Fürth (DE)
(72) Erfinder: Frick, Günther, 90765 Fürth (DE)
(74) Vertreter: Böhme, Volker, Dipl.-Ing.

(57) **Zusammenfassung**

Es gibt ein Versorgungsnetz, bei dem Leitungen 1 und Knotenstellen 2 unter der Erde fest und verlegt sind und bei dem die Versorgungseinrichtung als Informationsspeicher ausgebildete Hinweisschilder 3 aufweist, die über der Erde unbeweglich angeordnet sind. Dabei ist es erwünscht, wenn Personal bei der Durchführung von Prüf- und Wartungsarbeiten an einer Knotenstelle bzw. einem Leitungsstück von einer Verwaltungszentrale unabhängig ist. Dies ist erreicht, indem jedes der Hinweisschilder 3 mit einem unbeweglichen inaktiven Transponder 5 versehen ist, der Stamm-Daten und Speicherplatz für weitere Daten hat, wobei die Daten Prüf- und Wartungsdokumentation und Anweisungen wiedergeben, und indem den unbeweglichen Hinweisschilder-Transpondern 5 ein tragbares, manuell bedienbar ausgebildetes elektronisches Schreib/Lesegerät 6 beweglich zugeordnet ist, das einen Speicher 9 aufweist und mit einem Display 7 verbunden ist. Bei dem Versorgungsnetz sind alle Daten, die das Personal für die Durchführung einer Prüf- oder Wartungsarbeit an einer Knotenstelle oder einem Leitungsstück benötigt, in dem zugeordneten ortsfesten Transponder gespeichert, der wiederum entfernt von dem unzugänglichen Objekt: Knotenstelle, Leitungsstück, im Hinweisschild angeordnet ist.

## Beschreibung

Die Erfindung betrifft ein Versorgungsnetz mit Verwaltungseinrichtung, bei dem Leitungen und Knotenstellen unter der Erde fest und verlegt sind und bei dem die Verwaltungseinrichtung als Informationsspeicher ausgebildete Hinweisschilder aufweist, die über der Erde unbeweglich angeordnet sind. Mit fest und unbeweglich ist das Gleiche gemeint.

Das Versorgungsnetz ist erdverlegt und dient der Versorgung mit Trinkwasser, Abwasser, Gas, Heißdampf, elektrischer Energie und elektrischen Signalen. Die Leitungen sind also Rohrleitungen oder elektrische Leitungen. Die Knotenstellen sind Rohrverzweigungen, Hydranten, Schieber, Ventile oder sonstige Armaturen und Elektroverzweiger, Schalter oder Elektrokupplungen. Die über der Erde gut zugänglich angeordneten ortsfesten Hinweisschilder sind in der Regel den Knotenstellen zugeordnet, können aber auch Leitungsstücken zugeordnet sein. Das Versorgungsnetz besteht aus einer Vielzahl von Versorgungsleitungen, in die Knotenstellen eingebaut sind. Ein Versorgungsnetz ist ein sehr hochwertiges Gut, das immer funktionsfähig sein muß, so daß hinsichtlich der Funktionsfähigkeit besondere Maßnahmen zur Qualitätssicherung gesucht sind. Es sind an Knotenstellen oder auch Leitungsstücken Prüf- und Wartungsarbeiten durchzuführen, wobei Anweisungen bzw. Vorschriften oder Regeln zu beachten sind und nachträglich eine Prüf- und Wartungsdokumentation zu erstellen ist. Die Dokumentation und die Verwaltung des Versorgungsnetzes erfolgen in einer Verwaltungszentrale mittels eines zentralen, integrierten EDV-Systems.

Bei einem durch die Praxis bekannten Versorgungsnetz der eingangs genannten Art geben die Hinweisschilder die Information in Form von Schriftzeichen wieder. Jedes Hinweisschild ist also mit Schriftzeichen versehen, die mit dem menschlichen Auge erkennbar bzw. lesbar sind. Die Schriftzeichen geben die Art der Knotenstelle, die Position der zugehörigen Knotenstelle in Bezug auf das Hinweisschild und eine Identifikationsnummer zur Kennzeichnung der Lage der Knotenstelle in einem geographischen Plan bzw. einer geographischen Karte an. Das Personal für die Prüf- und Wartungsarbeiten bringt die Anweisungen von der Verwaltungszentrale auswendig gelernt oder als Schriftstück mit und fertigt über die durchgeführten Prüf- und Wartungsarbeiten einen Schriftstück-Bericht, der zu der Verwaltungszentrale gebracht wird und dort in das EDV-System eingegeben wird. Da das Personal bei der Durchführung einer Prüf- und Wartungsarbeit an einer Knotenstelle über die zuvor durchgeführten Prüf- und Wartungsarbeiten informiert sein soll, muß es sich diese Berichte über die früheren Prüf- und Wartungsarbeiten von der Verwaltungszentrale mitbringen. Die bei dem bekannten Versorgungsnetz gegebene Abhängigkeit des Personals von der Verwaltungszentrale erschwert die Arbeit des Personals und führt zu Arbeits- und Übertragungsfehlern, die im Hinblick auf die Qualitätssicherung vermieden werden sollten.

Eine Aufgabe der Erfindung ist es daher, ein Versorgungsnetz der eingangs genannten Art zu schaffen, bei dem das Personal bei der Durchführung von Prüf- und Wartungsarbeiten an einer Knotenstelle bzw. einem Leitungsstück von der Verwaltungszentrale unabhängig ist. Das erfindungsgemäße Versorgungsnetz ist, diese Aufgabe lösend, dadurch gekennzeichnet, daß eine Vielzahl der Hinweisschilder mit einem unbeweglichen inaktiven Transponder versehen ist, der Stamm-Daten und Speicherplatz für weitere Daten hat, wobei die Daten Prüf- und Wartungsdokumentation und Anweisungen wiedergeben, und daß den unbeweglichen Hinweisschilder-Transpondern ein tragbares, manuell bedienbar ausgebildetes elektronisches Schreib/Lesegerät beweglich zugeordnet ist, das einen Speicher aufweist und mit einem Display verbunden ist.

Bei dem erfindungsgemäßen Versorgungsnetz sind alle Daten, die das Personal für die Durchführung einer Prüf- oder Wartungsarbeit an einer Knotenstelle oder einem Leitungsstück benötigt, in dem zugeordneten ortsfesten Transponder gespeichert, der wiederum entfernt von dem unzugänglichen Objekt: Knotenstelle, Leitungsstück, im Hinweisschild angeordnet ist. Es sind z.B. sämtliche Hinweisschilder oder nur ein Teil der Hinweisschilder des Versorgungsnetzes mit Transpondern ausgerüstet. Das Personal übernimmt die erforderlichen Daten bei dem Hinweisschild, d.h. an Ort und Stelle aus dem ortsfesten Transponder in das transportable elektronische Schreib/Lesegerät und macht die Daten mittels des Displays für das menschliche Auge lesbar bzw. erkennbar. Das Personal ist bei der Durchführung einer Prüf- oder Wartungseinheit von einer Verwaltungszentrale, menschlichem Gedächtnis und mitgebrachten Schriftstücken unabhängig, was Fehler vermeidet und der Qualitätssicherung dient. Anweisungen, d.h. Vorschriften und Regeln für Prüf- und Wartungsarbeiten sind auf die jeweilige Knotenstelle bzw. das jeweilige Leitungsstück abgestimmt im Transponder gespeichert. Angaben über Art und Zustand der Knotenstelle bzw. des Leitungsstücks und über frühere Prüf- und Wartungsarbeiten sind im Transponder gespeichert.

Mittels der manuellen Bedienbarkeit des elektronischen Schreib/Lesegeräts werden nicht nur Daten aus dem Transponder abgerufen, sondern wird auch ein Bericht über die durchgeführte Prüf- oder Wartungsarbeit gefertigt, der von dem elektronischen Schreib/Lesegerät in den Transponder eingegeben wird. Das manuell bedienbare elektronische Schreib/Lesegerät dient auch dazu, Stammdaten, d.h. Daten über Art, Position und Lage der Knotenstelle bzw. des Leitungsstücks einzugeben. Der in dem Speicher festgehaltene Bericht über eine durchgeführte Prüf- oder Wartungsarbeit kann mittels eines PC, z.B. wenn das Gerät zur Verwaltungszentrale gebracht ist, in das zentral übergeordnete EDV-System eingespeist werden. Diese Art der Einspeisung von Daten über durchgeführte Prüf- oder Wartungsarbeiten vermeidet im Gegensatz zur weiter oben geschilderten bekannten Art Übertragungsfehler, was ebenfalls der Qualitätssicherung dient. Der Transponder ist inaktiv, da er keine Rechenoperation bzw. logischen Verknüpfungen durchzuführen hat. Das Display ist z.B. an das elektronische Schreib/Lesegerät direkt angebaut oder konstruktiv unabhängig vom Gerät und mit dem Gerät durch Funk oder Kabel verbunden.

Mit Versorgungsnetz ist hier auch ein Entsorgungsnetz gemeint. Der Transponder ist ein elektronischer Speicher. Das elektronische Schreib/Lesegerät ist mit einer Standardschnittstelle zum Anschluß an einen PC oder ein anderes geeignetes Gerät, z.B. in der Verwaltungszentrale, versehen. Bei einer Ausführungsform der Erfindung ist das elektronische Schreib/Lesegerät mit einem Funkmodul versehen, um direkt mit einer Empfangsstation, z.B. einem PC, zu kommunizieren. In diesem Fall ist das Display in der Empfangsstation.

Die Erfindung kann auch gesehen werden in der Anwendung von inaktiven Transpondern und mindestens einem elektronischen Schreib/Lesegerät auf ein Versorgungsnetz mit Verwaltungseinrichtung, bei dem Leitungen und Knotenstellen unter der Erde unbeweglich und verlegt sind, bei dem die Verwaltungseinrichtung als Informationsspeicher ausgebildete Hinweisschilder aufweist, die über der Erde unbeweglich angeordnet sind und dem eine Verwaltungszentrale zugeordnet ist. Dabei enthalten die ortsfesten Transponder Stammdaten und Prüf- und Wartungsdaten sowie Anweisungsdaten und sind zum elektronischen drahtlosen Auslesen und Eingeben von Daten geeignet. Das diesen ortsfesten Transpondern zugeordnete mobile elektronische Schreib/Lesegerät ist von einem Menschen tragbar, mit einem Display verbunden, zum Auslesen von Daten an je einem Transponder und Anzeigen dieser Daten geeignet, zur Eingabe von Daten in den Transponder geeignet und bzgl. dieser Daten zur Speicherung und Abgabe an die Zentralverwaltung geeignet. In der Regel sind dem Versorgungsnetz mehrere elektronische Schreib/Lesegeräte zugeordnet.

Es ist eine Ausführungsform der Erfindung möglich bei der der Transponder an dem Hinweisschild außen angeklebt ist. Es ist nun ein Hinweisschild bekannt (DE-AS 1 099 334, DE-PS 43 24 736), bei dem eine Trägerplatte ein Fenster aufweist, in das ein mit Schenkeln versehenes Feld eingesetzt ist. Die erwähnte Ausführungsform der Erfindung läßt sich verwirklichen, indem der Transponder an der Hinweisschild-Trägerplatte neben dem Fenster bzw. Feld angeklebt ist. Die Anbringung des Transponders an der Trägerplatte muß auf jeden einzelnen Typ einer Vielzahl verschiedener Typen von Trägerplatten abgestimmt sein und erschwert ein Austauschen des Transponders.

Eine Aufgabe ist es daher, ein erfindungsgemäßes Versorgungsnetz zu schaffen, bei dem der Transponder an dem Hinweisschild in einer vom jeweiligen Typ des Hinweisschildes unabhängigen und leichter auswechselbaren Art angebracht ist. Die Erfindung besteht diese Aufgabe lösend, darin, daß mit Transpondern versehene Hinweisschilder jeweils den Transponder an einem mit Schenkeln versehenen Feld aufweisen, das in eine Hinweisschild-Trägerplatte eingesetzt ist.

Die Abmessungen der Felder sind unabhängig vom jeweiligen Typ des Hinweisschildes bzw. der Trägerplatte gleich. Die Transponder lassen sich an den Feldern vorab für jeden Typ von Hinweisschild anbringen. Das mit dem Transponder bestückte Feld wird in ein dafür bestimmtes Fenster der jeweiligen Trägerplatte eingebracht. Durch ein übliches Austauschen des Feldes an der Trägerplatte läßt sich der Transponder vereinfacht auswechseln.

Besonders zweckmäßig und vorteilhaft ist es, wenn der Transponder in eine Aussparung des Feldes eintaucht. Dies verbessert den Halt des Transponders am Feld. Eine den Transponder aufnehmende Aussparung läßt sich an einer stets gleichen Art von Feld weit einfacher vorsehen als an vielen verschiedenen Typen von Trägerplatten.

Das hier zur Rede stehende Hinweisschild besitzt die Trägerplatte mit Fenstern zur Aufnahme der einsetzbaren Felder, bei welchen Widerlager und Rasten zur Halterung dienen. Die Felder sind von vorne einsetzbar, aber nur von der Rückseite des Hinweisschildes lösbar. Am Feld sind, in der Regel rechtwinkelig zum Feld stehende, federnde Schenkel mit Rasten angeordnet, welche mit den an der Trägerplatte befindlichen Widerlagern zusammenwirken.

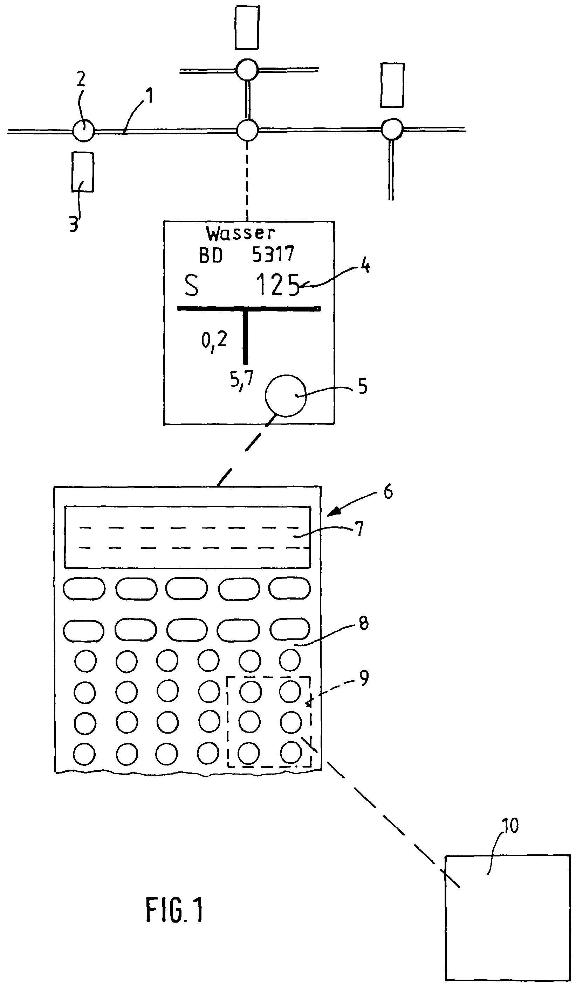

In der Zeichnung sind bevorzugte Ausführungsformen der Erfindung dargestellt und zeigt
- Fig. 1: schematisch ein Versorgungsnetz mit Verwaltungseinrichtung,
- Fig. 2: schematisch ein weiteres Versorgungsnetz mit Verwaltungseinrichtung und
- Fig. 3: einen Schnitt eines Hinweisschildes des Versorgungsnetzes gemäß Fig. 2, in einem gegenüber Fig. 2 vergrößerten Maßstab.

Das Versorgungsnetz gemäß Zeichnung weist ein Leitungsnetz auf, das nur teilweise gezeigt ist, das für Wasser bestimmt ist und das aus Leitungsstücken 1 und Knotenstellen 2 besteht. Jeder Knotenstelle 2 ist ein Hinweisschild 3 zugeordnet, von denen eines in der Zeichnung vergrößert dargestellt ist. Das Hinweisschild 3 ist in herkömmlicher Weise mit Schriftzeichen 4 dauerhaft versehen, die vom menschlichen Auge sehbar sind. An dem Hinweisschild 3 ist weiterhin ein Transponder 5 außen angeklebt, der ein Gehäuse aufweist und mit einer Antenne versehen ist. mit dem Transponder 5 ist in Wirkverbindung setzbar ein elektronisches Schreib/Lesegerät 6, das ein mehrzeiliges Display 7 und ein Tastenfeld 8 aufweist, das mit Gruppen von verschiedenartigen Tasten ausgestattet ist. Das Schreib/Lesegerät 6 enthält auch einen Speicher 9, der in Wirkverbindung setzbar ist mit einem EDV-System einer Verwaltungszentrale 10.

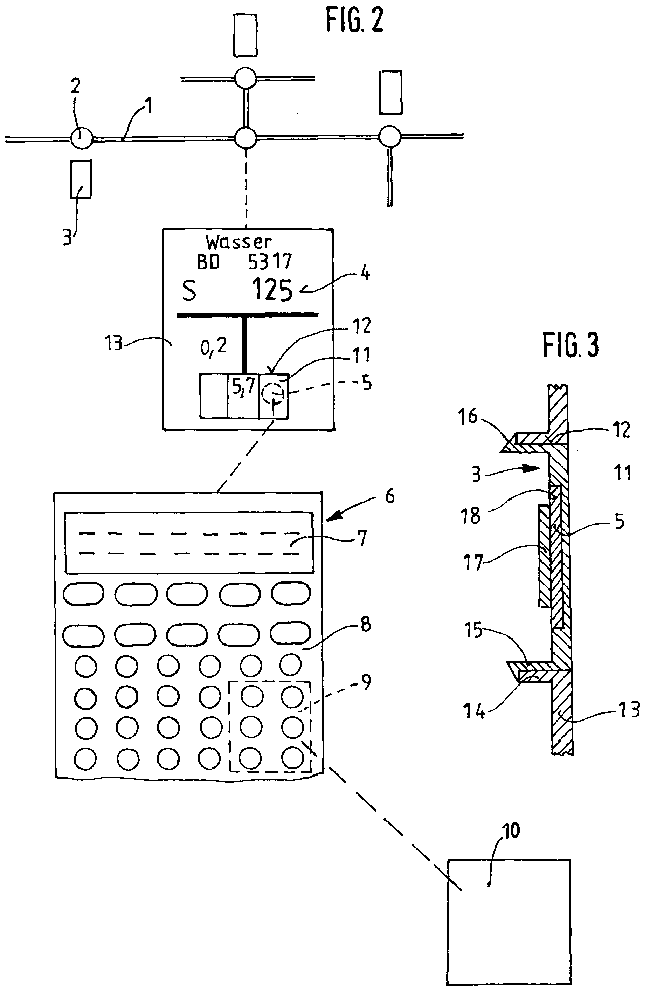

Gemäß Fig. 2 und 3 sitzt Transponder 5 an einem Feld 11, das in einem Fenster 12 einer Trägerplatte 13 des Hinweisschildes 3 angeordnet ist. Gemäß Fig. 2 bildet die Trägerplatte 13 am Rand des Fensters 12 Widerlager 14 und weist das Feld 11 Schenkel 15 auf, die mit Rasten 16 versehen sind, welche die Widerlager 14 hintergreifen. Die Trägerplatte 13 bildet auch einen im Fenster 12 mittigen Steg 17, der das Feld 11 von hinten abstützt. An der Innenseite des Feldes 11, d.h. an der den Schenkeln zugeordneten Seite des Feldes ist dieses mit einer Aussparung versehen, in welcher der Transponder 5 angeordnet ist.

## Patentansprüche

1. Versorgungsnetz mit Verwaltungseinrichtung,
bei dem Leitungen und Knotenstellen unter der Erde fest und verlegt sind und
bei dem die Verwaltungseinrichtung als Informationsspeicher ausgebildete Hinweisschilder aufweist, die über der Erde unbeweglich angeordnet sind,
dadurch gekennzeichnet,
daß eine Vielzahl der Hinweisschilder (3) mit einem unbeweglichen inaktiven Transponder (5) versehen ist, der Stamm-Daten und Speicherplatz für weitere Daten hat, wobei die Daten Prüf- und Wartungsdokumentation und Anweisungen wiedergeben,
und
daß den unbeweglichen Hinweisschilder-Transpondern (5) ein tragbares, manuell bedienbar ausgebildetes elektronisches Schreib/Lesegerät (6) beweglich zugeordnet ist, das einen Speicher (9) aufweist und mit einem Display (7) verbunden ist.

2. Versorgungsnetz nach Anspruch 1, dadurch gekennzeichnet, daß mit Transpondern (5) versehene Hinweisschilder (3) jeweils den Transponder (5) an einem mit Schenkein (16) versehenen Feld (11) aufweisen, das in eine Hinweisschild-Trägerplatte (13) eingesetzt ist.

3. Versorgungsnetz nach Anspruch 2, dadurch gekennzeichnet, daß der Transponder (5) in eine Aussparung (18) des Feldes (11) eintaucht.
